# EUROPÄISCHE PATENTSCHRIFT

(11) **EP 3 293 132 B1**
(45) Veröffentlichungstag und Bekanntmachung des Hinweises auf die Patenterteilung: **17.10.2018**
(21) Anmeldenummer: 17001440.1
(22) Anmeldetag: 28.08.2017
(51) Int. Cl.: B65G 59/06

(54) **TUBENFÜLLMASCHINE MIT EINER TUBENKÖRPER-VEREINZELUNGSVORRICHTUNG**
TUBE FILLING MACHINE WITH A TUBE BODY SEPARATING DEVICE
MACHINE DE REMPLISSAGE DE TUBES POURVUE D'UN DISPOSITIF DE SÉPARATION DE CORPS TUBULAIRES

(30) Priorität: 09.09.2016 DE 102016010793
(43) Veröffentlichungstag der Anmeldung: 14.03.2018
(73) Patentinhaber: IWK Verpackungstechnik GmbH, 76297 Stutensee (DE)
(72) Erfinder: Schweikert, Wolfgang, 76661 Philippsburg (DE); Knoch, Philipp, 76135 Karlsruhe (DE); Meissner, Marius, 76287 Rheinstetten (DE)
(74) Vertreter: Lichti - Patentanwälte Partnerschaft mbB

(56) Entgegenhaltungen:
- JP-A- H0 472 223
- JP-A- H07 196 257
- JP-A- S60 112 531
- JP-A- S60 228 330
- US-A- 4 966 521

## Beschreibung

Die Erfindung betrifft eine Tubenfüllmaschine mit einer Tubenkörper-Vereinzelungsvorrichtung, die einen Schacht mit zumindest einer Seitenwand und einem Schachtboden aufweist, wobei in dem Schacht eine Vielzahl von Tubenkörpern in horizontaler Ausrichtung parallel nebeneinander und übereinander liegend aufnehmbar sind, wobei im unteren Bereich des Schachtes eine Transportvorrichtung angeordnet ist, mittels der die Tubenkörper einzeln und nacheinander durch eine nahe dem Schachtboden angeordnete Auslassöffnung der Seitenwand in Transportrichtung aus dem Schacht heraustransportierbar sind, und wobei der Schachtboden zumindest abschnittsweise von einem verstellbar gelagerten Bodenteil gebildet ist, das mittels einer Antriebsvorrichtung oszillierend bewegbar ist.

In einer Tubenfüllmaschine werden vorgefertigte Rohlinge, sogenannte Tubenkörper, nacheinander einer Füllstation zugeführt, dort mit einer üblicherweise pastösen Masse, beispielsweise einer Creme, gefüllt und anschließend verschlossen. Die Zuführung zu der Füllstation erfolgt in einer sogenannten endlosen Reihe. Zu diesem Zweck werden die Tubenkörper auf einer Transportvorrichtung, beispielsweise einem Förderband, in liegender Ausrichtung entsprechend hintereinander angeordnet. Es ist bekannt, die Tubenkörper manuell auf der Transportvorrichtung zu positionieren, jedoch ist dies sehr unwirtschaftlich.
Aus der DE 18 18 689 U ist es bekannt, vor der Transportvorrichtung eine Tubenkörper-Vereinzelungsvorrichtung anzuordnen, die einen Schacht mit einer oder mehreren Seitenwänden und einem Schachtboden aufweist. In dem Schacht wird eine Vielzahl von Tubenkörpern üblicherweise von oben eingefüllt, wobei die Tubenkörper in horizontaler Ausrichtung neben- und übereinander liegend sowie parallel zueinander angeordnet sind. Im unteren Bereich einer Seitenwand ist eine Auslassöffnung vorgesehen, die in ihrer Größe so dimensioniert ist, dass immer nur ein Tubenkörper durch die Auslassöffnung hindurchpasst. Der Schachtboden ist von einer Rüttelplatte gebildet mittels der die jeweils aufliegenden Tuben in Richtung der Auslassöffnung gefördert und durch diese hindurch aus dem Schacht heraus auf eine Transportvorrichtung aufgebracht werden. Außerhalb des Schachtes ist auf der Transportvorrichtung auf diese Weise eine endlose Reihe von horizontal ausgerichteten, nebeneinander liegenden Tubenkörpern gebildet.

Mit anderen Worten offenbart die De 18 18 689 U den Oberbegriff des Anspruchs 1. Es hat sich gezeigt, dass sich die Tubenkörper im Bereich der Auslassöffnung verklemmen können. Die Transportvorrichtung übt auf die Tubenkörper eine in Richtung der Auslassöffnung wirkende Kraft aus, was dazu führen kann, dass sich mehrere Tubenkörper unter Bildung einer sogenannten Brücke verklemmen und die Auslassöffnung versperren. Eine entsprechende Sperre muss manuell aufgelöst werden, wozu es aus Sicherheitsgründen notwendig ist, die Tubenkörper-Vereinzelungsvorrichtung oder sogar die ganze Tubenfüllmaschine anzuhalten.

Die Förderbewegung der Tubenkörper infolge der Rüttelplatte durch die Auslassöffnung hindurch ist sehr langsam und wirkt sich negativ auf die Leistungsfähigkeit der Tubenfüllmaschine aus.

Der Erfindung liegt die Aufgabe zugrunde, eine Tubenfüllmaschine mit einer Tubenkörper-Vereinzelungsvorrichtung der genannten Art zu schaffen, bei der ein Verklemmen von Tubenkörpern vor der Auslassöffnung erschwert oder vermieden ist und mit der eine schnelle Anbringung der Tubenkörper an dem Schacht möglich ist.

Diese Aufgabe wird erfindungsgemäß durch eine Tubenfüllmaschine mit einer Tubenkörper-Vereinzelungsvorrichtung mit den Merkmalen des Anspruchs 1 gelöst. Dabei ist vorgesehen, dass der Schachtboden im Bereich zwischen dem verstellbar gelagerten Bodenteil und der Auslassöffnung zumindest abschnittsweise von einem Abschnitt eines die Transportvorrichtung bildenden Förderbandes gebildet ist, das in Transportrichtung angetrieben ist.

Die Erfindung geht von der Grundüberlegung aus, dass man eine Verklemmung der Tubenkörper, d.h. eine sogenannte Brücke, verhindern oder auflösen kann, indem man auf die Tubenkörper eine von der Auslassöffnung weg und vorzugsweise entgegen der Transportrichtung gerichtete Kraft aufbringt. Dies erfolgt erfindungsgemäß durch das oszillierend bewegte Bodenteil.

Die oszillierende Bewegung des Bodenteils ist vorzugsweise eine lineare hin- und hergerichtete Bewegung, die in bevorzugter Ausgestaltung der Erfindung in Transportrichtung und entgegengesetzt dazu erfolgt.

Bei dem Bodenteil kann es sich beispielsweise um eine im wesentlichen horizontal ausgerichtete Platte handeln.

Da das Bodenteil Bestandteil des Schachtbodens ist, wird auf zumindest einige Tubenkörper der unteren Lage der im Schacht aufgenommenen Tubenkörper abwechselnd eine zur Auslassöffnung gerichtete Kraft und anschließend eine entgegengesetzte, von der Auslassöffnung weg gerichtete Kraft aufgebracht, wodurch die Verklemmungen der Tubenkörper vermieden oder aufgelöst werden.

Zur Steigerung der Geschwindigkeit der Ausbringung der Tuben durch die Auslassöffnung hindurch ist vorgesehen, dass der Schachtboden im Bereich zwischen dem verstellbar gelagerten Bodenteil und der Auslassöffnung zumindest abschnittsweise von einem Abschnitt eines in Transportrichtung angetriebenen, die Transportvorrichtung bildenden Förderbandes gebildet ist. Auf diese Weise ist erreicht, dass die Tubenkörper mittels des oszillierenden Bodenteils innerhalb des Schachts auf das Förderband geschoben und von diesem durch die Auslassöffnung hindurch zu einer weiteren Arbeitsstation transportiert werden. Im Zusammenwirken des Förderbandes mit dem oszillierend bewegten Bodenteil kann auf diese Weise eine sichere und schnelle Vereinzelung und Abführung der Tubenkörper durch die Auslassöffnung erreicht werden.

In Weiterbildung der Erfindung kann vorgesehen sein, dass der Schachtboden im Bereich zwischen dem verstellbar gelagerten Bodenteil und der Auslassöffnung zu mehr als der Hälfte, insbesondere mehr als 80% und vorzugsweise vollständig von einem Abschnitt des Förderbandes gebildet ist.

Bei dem Förderband kann es sich beispielsweise um ein Gurtband, d.h. um ein kontinuierlich endlos umlaufendes Transportband handeln. Alternativ ist es möglich, dass das Förderband nach Art einer Kette als Gliederband ausgebildet ist, d.h. aus einer Vielzahl hintereinander angeordneter, miteinander in Eingriff stehender Bandglieder aufgebaut ist.

Das Förderband erstreckt sich von der Außenseite des Schachtes durch die Auslassöffnung hindurch vorzugsweise soweit in den Schacht hinein, dass der maximale Abstand, den das oszillierende Bodenteil von der Auslassöffnung aufweisen kann, von dem Förderband überbrückt ist. Auf diese Weise ist sichergestellt, dass das Bodenteil die Tubenkörper immer auf die Oberseite des Förderbandes aufschiebt.

In bevorzugter Ausgestaltung der Erfindung ist vorgesehen, dass die oszillierende Bewegung des Bodenteils mit einer Frequenz im Bereich von 0,5 Hz bis 3 Hz und insbesondere mit einer Frequenz von 1,0 Hz erfolgt.

Bei den Tubenkörpern handelt es sich um Tuben-Rohlinge insbesondere aus Kunststoff oder Metall, die einen im Wesentlichen kreiszylindrischen oder ovalzylindrischen Grundkörper besitzen, der an einem Ende mit einem Kragen, einem Auslass und einem Verschluss versehen ist. Der kreiszylindrische Grundkörper der Tubenkörper soll den Durchmesser d aufweisen. Es hat sich als vorteilhaft erwiesen, wenn der Hub der oszillierenden Bewegung des Bodenteils dem 1,0-fachen bis 5,0-fachen und insbesondere dem 2,5-fachen bis 3,5-fachen des Durchmessers d des Tubenkörpers entspricht.

Die Verklemmungen bzw. Brücken der Tubenkörper bauen sich üblicherweise in dem Bereich vor der Auslassöffnung auf und überbrücken diesen. In besonders bevorzugter Ausgestaltung der Erfindung ist vorgesehen, dass das Bodenteil in einem maximalen Abstand a von der Auslassöffnung angeordnet ist, um die Verklemmung bzw. die Brücke wirksam auflösen zu können. Der Abstand a bezeichnet dabei den Abstand zwischen der Auslassöffnung und dem der Auslassöffnung zugewandten Ende des Bodenteils, wenn sich dieses im hinteren, der Auslassöffnung abgewandten Umkehrpunkt seiner oszillierenden Bewegung befindet, d.h. a ist der größte Abstand, den das Bodenteil von der Auslassöffnung einnehmen kann. In möglicher Ausgestaltung der Erfindung kann vorgesehen sein, dass der Abstand a das 1,0-fache bis 5,0-fache und insbesondere das 2,0-fache bis 3,0-fache des Durchmessers d des Tubenkörpers beträgt.

Einige Tubenkörper der unteren Lage der in dem Schacht aufgenommenen Tubenkörper liegen auf dem oszillierend angetriebenen Bodenteil auf, so dass von dem Bodenteil bei dessen Bewegung über Reibung eine Kraft auf diese Tubenkörper aufgebracht wird. In bevorzugter Ausgestaltung der Erfindung kann vorgesehen sein, dass das Bodenteil an seinem der Auslassöffnung zugewandten Ende eine Stoßkante mit einer Höhe h aufweist. Wenn das Bodenteil in Richtung der Auslassöffnung bewegt wird, drückt die Stoßkante einen oder mehrere Tubenkörper in Richtung der Auslassöffnung, wodurch eine Übertragung der Tubenkörper auf das Förderband sichergestellt und zusätzlich die Ausbildung einer Brücke oder einer Verklemmung vermieden ist.

Es hat sich als vorteilhaft erwiesen, wenn die Höhe h der Stoßkante das 0,1-fache bis 0,3-fache des Durchmessers d des Tubenkörpers beträgt.

Um einerseits sicher zu gewährleisten, dass ein Tubenkörper die Auslassöffnung problemlos passieren kann, und um andererseits zu verhindern, dass mehrere Tuben gleichzeitig durch die Auslassöffnung hindurchtreten, kann die Durchlassöffnung eine lichte Weite des 1,3-fachen bis 1,5-fachen und insbesondere des 1,4-fachen des Durchmessers d des Tubenkörpers aufweisen.

Um die Auslassöffnung an verschiedene Formate von Tubenkörpern anpassen zu können, kann die Größe der Auslassöffnung einstellbar und veränderbar sein.

Als Antriebsvorrichtung für das oszillierend bewegte Bodenteil findet vorzugsweise ein Elektromotor, insbesondere ein Servomotor, oder ein pneumatischer Antrieb Verwendung.

Um zu verhindern, dass die durch die Auslassöffnung hindurchtretenden Tuben zurückrollen und um für deren sicheren Weitertransport zu sorgen, kann das Förderband relativ zur Horizontalen in Transportrichtung nach unten geneigt sein, wobei sich eine Neigung von 0,5° bis 3° zur Horizontalen als vorteilhaft erwiesen hat.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: Eine Seitenansicht einer Tubenkörper-Vereinzelungsvorrichtung in einer Tubenfüllmaschine und
- Fig. 2: eine schematische Darstellung des Bereichs der Auslassöffnung der Tubenkörper-Vereinzelungsvorrichtung.

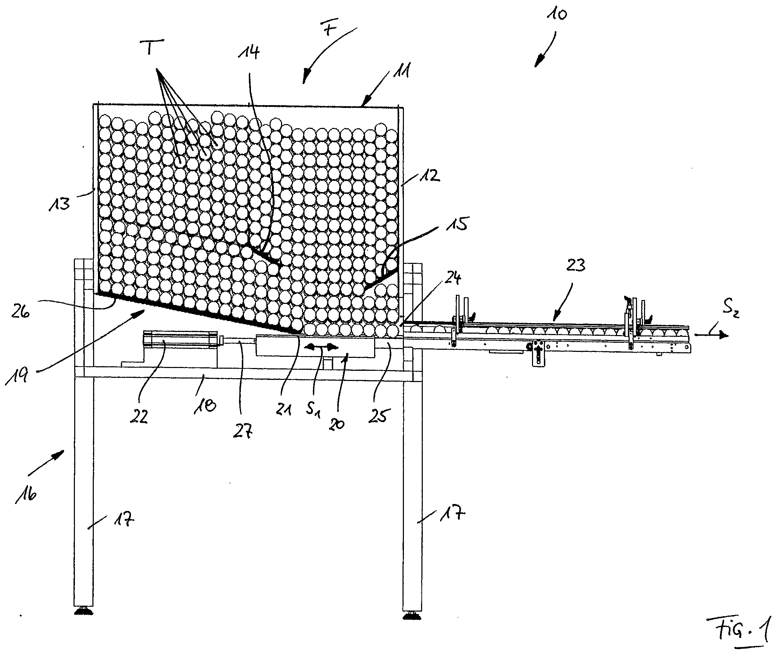

Fig. 1 zeigt eine Seitenansicht einer Tubenkörper-Vereinzelungsvorrichtung 10 einer Tubenfüllmaschine. Dabei ist ein Gestell 16 mit Standfüßen 17 und einer Platte 18 vorgesehen. Auf dem Gestell 16 ist ein Schacht 11 angeordnet, der in Wesentlichen vertikal ausgerichtet ist und von Seitenwänden 12 und 13 begrenzt ist. Auf seiner Oberseite ist der Schacht 11 offen. Auf seiner Unterseite ist er von einem Schachtboden 19 begrenzt. Der Schachtboden 19 umfasst ein feststehendes Bodenteil 26, das gemäß Fig. 1 auf der linken Seite des Schachtbodens 19 angeordnet und gegenüber einer Horizontalen zur Mitte des Schachtes nach unten geneigt ist. Ferner umfasst der Schachtboden 19 ein verstellbar gelagertes Bodenteil 20, dessen Oberseite im Wesentlichen horizontal ausgerichtet ist. Das Bodenteil 20 ist über eine Verbindungsstange 27 mit einer Antriebsvorrichtung 22 verbunden, mittels der das Bodenteil 20 in eine lineare oszillierende Bewegung versetzt werden kann, wie es durch den Doppelpfeil S₁ angedeutet ist.

In der gemäß Fig. 1 rechten Seitenwand 12 ist nahe dem verstellbar gelagerten Bodenteil 20 im unteren Bereich eine Auslassöffnung 24 ausgebildet, die von einer Transportvorrichtung 23 in Form eines angetriebenen Förderbandes 25 durchdrungen ist, das außenseitig des Schachtes 11 zu einer weiteren, nicht dargestellten Arbeitsstation führt. Die Transportvorrichtung 23 bzw. des Förderbandes 25 erstreckt sich bis in den Schacht 11 hinein und bildet auf diese Weise den zwischen dem verstellbar gelagerten Bodenteil 20 und der Auslassöffnung 24 angeordneten Bereich des Schachtbodens 19. Die Transportvorrichtung 23 bzw. des Förderbandes 25 ist in einer Transportrichtung S₂ angetrieben, die vom Inneren des Schachtes 11 durch die Auslassöffnung 23 hindurch zur Außenseite des Schachtes 11 verläuft.

In den Schacht 11 können von dessen Oberseite vorgefertigte Tubenkörper T eingefüllt werden, wie es durch den Pfeil F angedeutet ist. Die Tubenkörper T werden so in den Schacht 11 eingefüllt, dass sie in horizontaler Ausrichtung parallel nebeneinander und übereinander liegend angeordnet sind, wie es in Fig. 1 dargestellt ist, wobei sich die Tubenkörper T senkrecht zur Zeichenebene erstrecken.

Innerhalb des Schachtes sind Leitbleche 14 und 15 vorgesehen, die einerseits den Fluss der Tubenkörper T innerhalb des Schachtes beeinflussen und andererseits den Stapeldruck auf die im Schacht 11 unten liegenden Tubenkörper T reduzieren sollen. Insbesondere das Leitblech 15, das nach Art eines Vordaches mit Abstand oberhalb der Auslassöffnung 24 angeordnet ist, soll dazu dienen, den von oben wirkenden Staudruck auf die vor der Auslassöffnung 24 liegenden Tubenkörper T zu reduzieren.

Das oszillierend angetriebene Bodenteil 20 besitzt eine obere Bodenplatte 21, die horizontal ausgerichtet ist und auf der einige Tubenkörper T der unteren Lage der im Schacht 11 gestapelten Tubenkörper T aufliegen.

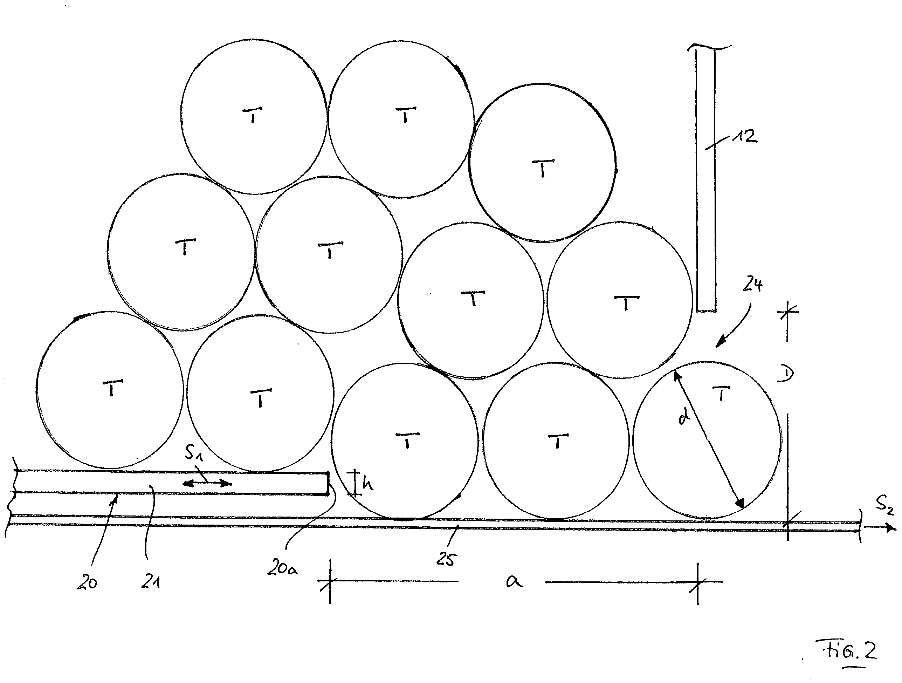

Die im Bereich der Auslassöffnung 24 vorhandenen Gegebenheiten sind schematisch in Fig. 2 dargestellt. Dabei ist ersichtlich, dass in der Seitenwand 12 die Auslassöffnung 24 gebildet ist. Die Auslassöffnung 24 hat eine größere vertikale lichte Weite D als der Durchmesser d der Tubenkörper T, wobei die Weite D etwa das 1,4-fache des Durchmessers d des Tubenkörpers T beträgt. Die Bodenplatte 21 des verstellbar gelagerten Bodenteils 20 endet in einem Abstand a von der Auslassöffnung 24, wobei der Abstand a etwa das 2,0-fache bis 3,0-fache des Durchmessers d des Tubenkörpers T beträgt. Der Abstand a bezeichnet dabei den Abstand zwischen der Auslassöffnung 24 und dem der Auslassöffnung 24 zugewandten Ende des Bodenteils 20, wenn sich dieses im hinteren, der Auslassöffnung 24 abgewandten Umkehrpunkt seiner oszillierenden Bewegung befindet, d.h. a ist der größte Abstand, den das Bodenteil 20 von der Auslassöffnung 24 einnehmen kann.

Das Bodenteil 20 und damit auch die Bodenplatte 21 sind oszillierend angetrieben, wobei die oszillierende Bewegung in Richtung der Auslassöffnung 24 und entgegengesetzt dazu und somit auch in Transportrichtung S₂ und entgegengesetzt dazu erfolgt, wie es durch den Doppelpfeil S₁ angedeutet ist.

Die Bodenplatte 21 weist an ihrem der Auslassöffnung 24 zugewandten Ende eine Stoßkante 20a auf, die eine Höhe h besitzt, wobei die Höhe h der Stoßkante 20a das 0,1-fache bis 0,3-fache des Durchmessers d des Tubenkörpers T beträgt.

Wie aus Fig. 2 ersichtlich ist, überbrückt die Transportvorrichtung 23, die als in Transportrichtung S₂ angetriebenes Förderband 25 ausgebildet ist, den Abstand a zwischen der Bodenplatte 21 und der Auslassöffnung 24. Durch die oszillierende Bewegung der Bodenplatte 21 wird eine Verklemmung der Tubenkörper T vor der Auslassöffnung 24 verhindert. Die Tubenkörper T gelangen im Bereich zwischen der Bodenplatte 21 und der Auslassöffnung 24 auf das Förderband 25 der Transportvorrichtung 23 und werden von diesem durch die Auslassöffnung 24 hindurch und weiter zu einer nächsten Arbeitsstation transportiert.

## Patentansprüche

1. Tubenfüllmaschine mit einer Tubenkörper-Vereinzelungsvorrichtung (10), die einen Schacht (11) mit zumindest einer Seitenwand (12) und einen Schachtboden (19) aufweist, wobei in dem Schacht (11) eine Vielzahl von Tubenkörpern (T) in horizontaler Ausrichtung parallel nebeneinander und übereinander liegend aufnehmbar sind, wobei im unteren Bereich des Schachtes (11) eine Transportvorrichtung (23) angeordnet ist, mittels der die Tubenkörper (T) einzeln und nacheinander durch eine nahe dem Schachtboden (19) angeordnete Auslassöffnung (24) der Seitenwand (12) in Transportrichtung (S₂) aus dem Schacht (11) heraustransportierbar sind, und wobei der Schachtboden (19) zumindest abschnittsweise von einem verstellbar gelagerten Bodenteil (20) gebildet ist, das mittels einer Antriebsvorrichtung (22) oszillierend bewegbar ist, **dadurch gekennzeichnet, dass** der Schachtboden (19) im Bereich zwischen dem verstellbar gelagerten Bodenteil (20) und der Auslassöffnung (24) zumindest abschnittsweise von einem Abschnitt eines die Transportvorrichtung (23) bildenden Förderbandes (25) gebildet ist, das in Transportrichtung (S₂) angetrieben ist.

2. Tubenfüllmaschine nach Anspruch 1, **dadurch gekennzeichnet, dass** der Schachtboden (19) im Bereich zwischen dem verstellbar gelagerten Bodenteil (20) und der Auslassöffnung (24) zu mehr als der Hälfte von einem Abschnitt des Förderbandes (25) gebildet ist.

3. Tubenfüllmaschine nach Anspruch 2, **dadurch gekennzeichnet, dass** der Schachtboden (19) im Bereich zwischen dem verstellbar gelagerten Bodenteil (20) und der Auslassöffnung (24) vollständig von einem Abschnitt des Förderbandes (25) gebildet ist.

4. Tubenfüllmaschine nach einem der Ansprüche 1 bis 3, **dadurch gekennzeichnet, dass** die oszillierende Bewegung in Transportrichtung (S₂) und entgegengesetzt dazu erfolgt.

5. Tubenfüllmaschine nach einem der Ansprüche 1 bis 4, **dadurch gekennzeichnet, dass** die oszillierende Bewegung des Bodenteils (20) mit einer Frequenz im Bereich von 0,5 Hz bis 3 Hz erfolgt.

6. Tubenfüllmaschine nach Anspruch 5, **dadurch gekennzeichnet, dass** die oszillierende Bewegung des Bodenteils (20) mit einer Frequenz von 1,0 Hz erfolgt.

7. Tubenfüllmaschine nach einem der Ansprüche 1 bis 6, **dadurch gekennzeichnet, dass** das Bodenteil (20) in einem maximalen Abstand a von der Auslassöffnung (24) angeordnet ist.

8. Tubenfüllmaschine nach einem der Ansprüche 1 bis 7, **dadurch gekennzeichnet, dass** das Bodenteil (20) an seinem der Auslassöffnung (24) zugewandten Ende eine Stoßkante (20a) mit einer Höhe h aufweist.

9. Tubenfüllmaschine nach einem der Ansprüche 1 bis 8, **dadurch gekennzeichnet, dass** die Größe der Auslassöffnung (24) veränderbar ist.

10. Tubenfüllmaschine nach einem der Ansprüche 1 bis 9, **dadurch gekennzeichnet, dass** das Förderband (23) relativ zur Horizontalen in Transportrichtung (S₂) nach unten geneigt ist.

## Claims

1. Tube filling machine having a tube body separating device (10), which has a shaft (11) with at least one side wall (12) and a shaft bottom (19), wherein a multiplicity of tube bodies (T) can be accommodated in the shaft (11), lying beside one another and one above another in a horizontal alignment, wherein a transport device (23) is arranged in the bottom region of the shaft (11), by means of which the tube bodies (T) can be transported out of the shaft (11) in a transport direction (S₂) individually and one after another through an outlet opening (24) in the side wall (12), which outlet opening is arranged close to the shaft bottom (19), and wherein the shaft bottom (19) is at least partly formed by an adjustably mounted bottom part (20), which can be moved in oscillation by means of a drive device (22),
**characterized in that** the shaft bottom (19) in the region between the adjustably mounted bottom part (20) and the outlet opening (24) is at least partly formed by a section of a conveyor belt (25) which forms the transport device (23) and is driven in the transport direction (S₂).

2. Tube filling machine according to Claim 1,
**characterized in that** the shaft bottom (19) in the region between the adjustably mounted bottom part (20) and the outlet opening (24) is more than half formed by a section of the conveyor belt (25).

3. Tube filling machine according to Claim 2,
**characterized in that** the shaft bottom (19) in the region between the adjustably mounted bottom part (20) and the outlet opening (24) is entirely formed by a section of the conveyor belt (25).

4. Tube filling machine according to one of Claims 1 to 3, **characterized in that** the oscillating movement is carried out in the transport direction (S₂) and opposite thereto.

5. Tube filling machine according to one of Claims 1 to 4, **characterized in that** the oscillating movement of the bottom part (20) is carried out with a frequency in the range from 0.5 Hz to 3 Hz.

6. Tube filling machine according to Claim 5,
**characterized in that** the oscillating movement of the bottom part (20) is carried out with a frequency of 1.0 Hz.

7. Tube filling machine according to one of Claims 1 to 6, **characterized in that** the bottom part (20) is arranged at a maximum distance a from the outlet opening (24).

8. Tube filling machine according to one of Claims 1 to 7, **characterized in that** the bottom part (20) has a leading edge (20a) with a height h at its end facing the outlet opening (24).

9. Tube filling machine according to one of Claims 1 to 8, **characterized in that** the size of the outlet opening (24) is variable.

10. Tube filling machine according to one of Claims 1 to 9, **characterized in that** the conveyor belt (23) is inclined downwards relative to the horizontal in the transport direction (S₂)

## Revendications

1. Machine de remplissage de tubes pourvue d'un dispositif de séparation de corps tubulaires (10) comportant une cuvette (11) dotée d'au moins une paroi latérale (12) et d'un fond de cuvette (19), une pluralité de corps tubulaires (T) pouvant être logés de façon à reposer parallèlement les uns à côté des autres et les uns au-dessus des autres, selon une orientation horizontale, dans la cuvette (11), un dispositif de transport (23) étant disposé dans la région inférieure de la cuvette (11) à l'aide duquel les corps tubulaires (T) peuvent être transportés hors de la cuvette (11), dans la direction de transport (S₂), de façon séparée et les uns à la suite des autres, au travers d'une ouverture de sortie (24) de la paroi latérale (12) disposée à proximité du fond de cuvette (19), et le fond de cuvette (19) étant formé au moins en partie d'une partie de fond (20) disposée de façon mobile et pouvant être entraînée dans un mouvement oscillant par le dispositif d'entraînement (22), **caractérisée en ce que** le fond de cuvette (19) est formé, dans la région prévue entre la partie de fond (20) disposée de façon mobile et l'ouverture de sortie (24), au moins en partie par une section d'un tapis de transport (25) formant le dispositif de transport (23) entraîné dans la direction de transport (S₂).

2. Machine de remplissage de tubes selon la revendication 1, **caractérisée en ce que** le fond de cuvette (19) est formé, dans la région prévue entre la partie de fond (20) disposée de façon mobile et l'ouverture de sortie (24), pour plus de la moitié par une section du tapis de transport (25).

3. Machine de remplissage de tubes selon la revendication 2, **caractérisée en ce que** le fond de cuvette (19) est formé, dans la région située entre la partie de fond (20) disposée de façon mobile et l'ouverture de sortie (24), entièrement par une section du tapis de transport (25).

4. Machine de remplissage de tubes selon l'une quelconque des revendications 1 à 3, **caractérisée en ce que** le mouvement oscillant se produit dans la direction de transport (S2) et de façon opposée à lui.

5. Machine de remplissage de tubes selon l'une quelconque des revendications 1 à 4, **caractérisée en ce que** le mouvement oscillant de la partie de fond (20) se produit à une fréquence comprise dans la plage de 0,5 Hz à 3 Hz.

6. Machine de remplissage de tubes selon la revendication 5, **caractérisée en ce que** le mouvement oscillant de la partie de fond (20) se produit à une fréquence de 1,0 Hz.

7. Machine de remplissage de tubes selon l'une quelconque des revendications 1 à 6, **caractérisée en ce que** la partie de fond (20) est disposée à une distance maximale a de l'ouverture de sortie (24).

8. Machine de remplissage de tubes selon l'une quelconque des revendications 1 à 7, **caractérisée en ce que** la partie de fond (20) comporte, au niveau de son extrémité orientée vers l'ouverture de sortie (24), un bourrelet (20a) de hauteur h.

9. Machine de remplissage de tubes selon l'une quelconque des revendications 1 à 8, **caractérisée en ce que** la taille de l'ouverture de sortie (24) est variable.

10. Machine de remplissage de tubes selon l'une quelconque des revendications 1 à 9, **caractérisée en ce que** le tapis de transport (23) présente une inclinaison relative vers le bas par rapport à l'horizontale dans la direction de transport (S₂).
